# Europäisches Patentamt
# European Patent Office
# Office européen des brevets

(19)

(11) Veröffentlichungsnummer: **0 173 220**
**B1**

(12)

# EUROPÄISCHE PATENTSCHRIFT

(45) Veröffentlichungstag der Patentschrift:
21.06.89

(51) Int. Cl.⁴: **C 08 F 10/06**, C 08 F 4/64

(21) Anmeldenummer: 85110416.6

(22) Anmeldetag: 20.08.85

(54) Verfahren zur Herstellung von isotaktischem Polypropylenwachs.

(30) Priorität: 30.08.84 DE 3431842

(43) Veröffentlichungstag der Anmeldung:
05.03.86 Patentblatt 86/10

(45) Bekanntmachung des Hinweises auf die Patenterteilung:
21.06.89 Patentblatt 89/25

(84) Benannte Vertragsstaaten:
BE DE FR GB IT LU NL

(56) Entgegenhaltungen:
EP-A-0 006 619
FR-A-1 326 206
FR-A-2 019 336
NL-A-290 798

CHEMICAL ABSTRACTS, Band 77, Nr. 8, 21. August 1972, Seite 28, Zusammenfassung Nr. 49175q, Columbus, Ohio, US; & JP-A-72 06 408 (SHOWA DENKO K.K.) 23.02.1972

(73) Patentinhaber: HOECHST AKTIENGESELLSCHAFT, Postfach 80 03 20, D-6230 Frankfurt am Main 80 (DE)

(72) Erfinder: Hobes, John, Dr. Dipl.- Chem.,
Ernastrasse 26, D-4220 Dinslaken (DE)
Erfinder: Spaleck, Walter, Dr. Dipl.- Chem.,
Alexander- Flemmig- Strasse 2, D-4290 Bocholt (DE)
Erfinder: Payer, Wolfgang, Dr. Dipl.- Chem.,
Zedernweg 58, D-4230 Wesel 1 (DE)
Erfinder: Prött, Ernst, Dr. Dipl.- Chem.,
Vennstrasse 2, D-4200 Oberhausen 11 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 173 220 B1

## Beschreibung

Die Erfindung betrifft ein Verfahren zur Herstellung isotaktischer Polypropylen-Wachse. Hierbei wird Propylen unter hohem Druck bei Temperaturen von mindestens 180° C in Gegenwart bestimmter ionischer Katalysatoren polymerisiert.

Die Herstellung von festem Polypropylen durch Polymerisation von Propylen nach dem Ziegler-Niederdruckverfahren ist bekannt. Als Katalysatoren verwendet man bei dieser Arbeitsweise Verbindungen der Elemente der IV. bis VI. Nebengruppe des Periodensystems in Mischung mit metallorganischen Verbindungen der Elemente der I. bis III. Gruppe des Periodensystems. Die Umsetzung wird im allgemeinen in Suspension, in der Lösung oder auch in der Gasphase vorgenommen. Das Polymerisationsprodukt weist eine röntgenografisch bestimmte Kristallinität von 10 bis 25 % auf. Es stellt ein Gemisch aus amorphem Polypropylen einer Kristallinität unterhalb 10 % und aus kristallinem Polypropylen einer Kristallinität oberhalb 50 % dar.

Polypropylen mit einem Kristallinitätsgrad von 30 bis 85 % und einem Schmelzindex unter 30 erhält man durch Polymerisieren von Propylen in Gegenwart eines Katalysators, der durch Vermischen des Halogenids eines Metalls der Gruppe IVa, Va oder VIa des Periodensystems und einer metallorganischen Verbindung mit mindestens einer Metall-Kohlenwasserstoffbindung hergesetllt ist. Die Polymerisation wird bei 100 bis 250° C und einem Propylendruck durchgeführt, welcher der Temperatur in der Weise proportional ist, daß er bei einer Temperatur von 100° C mindestens 70 atm und bei einer Temperatur von 250° C mindestens 773 atm beträgt. (vgl. DE-A1-1 420 670)

Feste hochmolekulare hochkristalline Polyolefine erhält man durch Lösungspolymerisation von alpha-Olefinen mit mindestens 3 Kohlenstoffatomen nach der DE-A1-1 917 086 bei Temperaturen über 140° C sowie Drücken von Atmosphärendruck bis etwa 2000 atm in Gegenwart eines eine Organopolylithiumaluminiumverbindung und alpha-Titantrichlorid-enthaltenden Katalysators. Die durch das Lösungsverhalten des Polymerisationsproduktes in Hexan ermittelte Kristallinität liegt maximal oberhalb 90 %, völlig kristalline Produkte lassen sich nach diesen Verfahren aber nicht erhalten. Ebenso fehlen Hinweise auf die Möglichkeit, wachsartige Polymerisate herzustellen.

Bisher war es also nicht möglich, durch einfache Polymerisation, d.h. ohne zusätzliche Extraktionsschritte wachsartiges isotaktisches Polypropylen herzustellen.

Derartige Polymerisate besitzen wegen ihres hohen Tropfpunktes von etwa 150° C umfangreiche technische Anwendung.

Aufgabe der Erfindung ist es daher, ein Verfahren bereitzustellen, das es erlaubt, Propylen in wachsartige isotaktische Polymerisate zu überführen.

Die Erfindung besteht in einem Verfahren zur Herstellung isotaktischer Polypropylenwachse durch Polymerisation von Propylen bei 180 bis 350° C und 500 bis 3000 bar ($5 \cdot 10^4$ bis $3 \cdot 10^5$ kPa). Es ist dadurch gekennzeichnet, daß man die Polymerisation ohne Verwendung eines Lösungs- oder Suspensionsmittels in Gegenwart eines Mischkatalysators durchführt, der aus einer Titan (III)-Halogenverbindung und einer aluminiumorganischen Verbindung besteht.

Das erfindungsgemäße Verfahren ermöglicht es überraschenderweise stereospezifisch ausschließlich isotaktisches Produkt herzustellen, dessen Bildung in hoher Ausbeute unter den gewählten Reaktionsbedingungen nicht zu erwarten war.

Nach dem erfindungsgemäßen Verfahren werden wachsartige Polypropylene gewonnen. Hierunter versteht man Polymerisate mit einer Viskosität von 100 bis 1000 mPas, gemessen in einem Rotationsviskosimeter bei 170° C, entsprechend einer reduzierten spezifischen Viskosität (RSV-Wert) von 0,1 bis 1,0 gemessen in einem Ubbelohde-Viskosimeter.

Zur Durchführung des erfindungsgemäßen Verfahrens setzt man Katalysatoren ein, die aus der Mischung einer Ti (III)-Halogenverbindung und einer metallorganischen Verbindung des Aluminiums bestehen.

Bevorzugte Titanhalogenide sind $TiCl_3$ und $TiCl_3/AlCl_3$-Mischverbindungen. Man erhält sie in bekannter Weise z. B. durch Reduktion von $TiCl_4$ mit Wasserstoff oder mit einer aluminiumorganischen Verbindung.

Unter metallorganischen Verbindungen des Aluminiums, die die zweite Komponente des Katalysatorsystems darstellen, versteht man Aluminiumtrialkyle $AlR_3$, Aluminiumdialkylhydride $AlR_2H$ und Alkylaluminiumhalogenide der Formel $RAlX_2$ bzw. $R_2AlX$ sowie die Umsetzungsprodukte aus Aluminiumtrialkylen oder Aluminiumdialkylhydriden und Diolefinen mit 4 bis 20 Kohlenstoffatomen. Hierbei stehen R für Alkylreste mit 1 bis 16, vorzugsweise 2 bis 6 Kohlenstoffatomen und X für Halogen, insbesondere Chlor und Brom. Geeignete metallorganische Verbindungen des Aluminiums sind z. B. Triethylaluminium, Tri-n-octylaluminium, Ethylaluminiumdichlorid, Diethylaluminiumchlorid, Isoprenylaluminium und insbesondere Tri-n-octylaluminium und Diethylaluminiumchlorid. Das Atomverhältnis von Aluminium zu Titan im Katalysatorsystem kann 5 : 1 bis 30 : 1 betragen.

Besonders wirksam sind Katalysatorsysteme mit einem Aluminium/Titan-Atomverhältnis zwischen 5 : 1 und 20 : 1.

Als zweckmäßig hat es sich erwiesen, den Katalysator in Konzentrationen von etwa 0,03 bis etwa 10,0 in mMol Ti/kg Polypropylen anzuwenden und durch die Menge des zugeführten Katalysators die Reaktionstemperatur zu steigern. Besonders vorteilhaft sind Katalysatorkonzentrationen von etwa 0,05 bis etwa 3,0 mMol Ti/kg Polypropylen. Auch geringere Katalysatorkonzentrationen können angewandt werden, doch nimmt dann die Polymerisationsgescwindigkeit ab. Höhere Katalysatorkonzentrationen können - bedingt durch die Abwesenheit eines Lösungs- bzw. Suspensionsmittels - zu Schwierigkeiten bei der Steuerung der Reaktion führen.

Der Katalysator wird dem Reaktor in Form einer Aufschlämmung in einem organischen Lösungsmittel zugeführt. Als Lösungsmittel kommen vor allem Kohlenwasserstoffe oder Kohlenwasserstoffgemische mit einem Siedepunkt bzw. Siedebereich von 130 bis 260°C in Betracht. Beispiele für geeignete Kohlenwasserstoffe sind Mitteldestillate wie Solvent-Naphtha, Schwerbenzol und Petroleum.

Es ist ein wesentliches Merkmal des erfindungsgemäßen Verfahrens, die Polymerisation in Abwesenheit eines Suspensions- oder Lösungsmittels, also in Masse, durchzuführen.

Unter diesen Umständen löst sich das Monomere im bereits gebildeten Polymerisat, und es ist durch entsprechende Zudosierung des Monomeren dafür Sorge zu tragen, daß die Reaktion gleichmäßig abläuft, die Wärmeübertragung ungehindert erfolgt und der Katalysator homogen im Reaktionsgemisch verteilt ist. Es hat sich bewährt, die Konzentration des Monomeren, das im Polymeren gelöst ist, auf das ein- bis vierfache des Polymerengewichtes einzustellen.

Das erfindungsgemäße Verfahren wird bei Temperaturen von etwa 180 bis etwa 350°C, vorzugsweise bei Temperaturen von etwa 200 bis etwa 250°C durchgeführt.

Die Polymerisation des Propylens nach der neuen Arbeitsweise erfolgt bei Drucken zwischen etwa 500 und etwa 3000 bar (etwa $5 \cdot 10^4$ bis etwa $3 \cdot 10^5$ kPa), insbesondere bei Drucken von etwa 1000 bis etwa 2000 bar (etwa $1 \cdot 10^5$ bis etwa $2 \cdot 10^5$ kPa).

Die Polymerisation nach dem neuen Verfahren wird in Hochdruckapparaturen durchgeführt. Geeignet sind sowohl Autoklaven als auch Röhrenreaktoren bekannter Bauart. Außer über die Temperatur kann das Molekulargewicht auch durch Zusatz von Wasserstoff geregelt werden wobei mit steigender Wasserstoffkonzentration das Molekulargewicht abnimmt. Das Polymerisationsprodukt wird über ein Abscheidersystem, in dem die Trennung zwischen gasförmigen und flüssigen Anteilen erfolgt, in einen Homogenisator geleitet und darauf dem Reaktor entnommen.

Die nach dem neuen Verfahren gewonnenen Polypropylen-Wachse zeichnen sich durch hohe Kristallinität aus. Sie finden Anwendung insbesondere in der Textil-, Leder- und Papierindustrie als Beschichtungsmittel. Darüber hinaus setzt man sie u.a. als Zusatz zu Kohlenwasserstoffwachsen, als Träger für Pigmentkonzentrate, zur Herstellung technischer Emulsionen, als Slipmittel für Druckfarben und Anstrichmittel, als Gleitmittel für Kunststoffe, als Hilfsmittel bei der Gummiextrusion, als Putzmittelbestandteil ein.

In den nachfolgenden Beispielen wird das erfindungsgemäße Verfahren näher erläutert.

### Herstellung des Katalysators I

41 g eines handelsüblichen $TiCl_3 \cdot 1/3\ AlCl_3$ (Stauffer AA 1.1) werden in 1200 ml einer hochsiedenden Kohlenwasserstofffraktion (Siedebereich 130 bis 180°C) suspendiert.

Unter Rühren tropft man bei 60°C innerhalb 15 min 326 ml einer 1,3-molaren Lösung von Diethylaluminiumchlorid (DEAC) in derselben hochsiedenden Kohlenwasserstofffraktion zu, rührt 15 min nach und versetzt darauf, ebenfalls tropfenweise, innerhalb 30 min mit 154 ml 1-Hexen. Unter Rühren läßt man 1 h bei 60°C nachreagieren.

### Herstellung des Katalysators II

32 g eines handelsüblichen $TiCl_3$-Elektronendonator-Addukts mit 71,4 Gew.% $TiCl_3$ ($TiCl_3P$ 1 der TOYO Stauffer Chemical Co.) werden in 1200 ml der bei der Herstellung des Katalysator I verwendeten hochsiedenden Kohlenwasserstofffraktion suspendiert.

Unter Rühren tropft man bei 60°C innerhalb 15 min 546 ml einer 0,54-molaren Lösung von Tri-n-octylaluminium (TNOA) in der hochsiedenden Kohlenwasserstofffraktion hinzu, rührt 15 min nach und versetzt darauf, ebenfalls tropfenweise, innerhalb 30 min mit 109 ml 1-Hexen. Unter Rühren läßt man 1 h bei 60°C nachreagieren. Das Aluminium/Titan-Atomverhältnis im Katalysatorsystem beträgt 13 : 1.

Die entsprechend den nachstehenden Beispielen 1 bis 3 hergestellten Polypropylenwachse werden durch Bestimmung des Tropfpunktes nach DIN 51 801, durch IR-Spektroskopie und durch Messung der reduzierten spezifischen Viskosität (RSV) charakterisiert. Die Bestimmung des RSV-Wertes, dem Quotienten aus spezifischer Viskosität und Konzentration, erfolgt im Kapillarviskosimeter bei Temperaturen von 135°C ± 0,2°C, und zwar in Konzentrationen von 0,025 g Polypropylen je 100 ml Lösung. Als Lösungsmittel wird Dekalin eingesetzt.

### Beispiel 1

Propylen (polymer grade) wird unter Verwendung des Katalysators I in einem 0,5 1-Hochdruckautoklaven bei 1000 bar ($1 \cdot 10^5$ kPa)

und 210°C polymerisiert. Die Einstellung der Reaktionstemperatur erfolgt durch Zudosieren einer entsprechenden Menge Katalysator. Bei Einsatz von 12,16 kg Propylen/h sind hierfür 3,24 mg-Atom Ti/h erforderlich. Gleichzeitig wird weiteres DEAC dem Reaktionsgemisch in einer solchen Menge zugesetzt, daß das Atomverhältnis Al/Ti 13 : 1 beträgt.

Der Propylen-Umsatz beträgt 9,0 Gew. -%, bezogen auf eingesetztes Olefin, entsprechend einer Wachsproduktion von 1,08 kg/h. Der RSV-Wert des Wachses beträgt 0,22, sein Tropfpunkt 151°C. Die IR-spektroskopische Untersuchung ergibt, daß das Wachs ausschließlich isotaktische Struktur aufweist.

## Beispiel 2

In der Apparatur des Beispiels 1 wird Propylen unter Verwendung des Katalysators I bei 1500 bar (1,5 · 10 kPa) und 210°C polymerisiert. Die Einstellung der Reaktionstemperatur erfolgt wiederum durch Zudosieren einer entsprechenden Menge Katalysator. Bei Einsatz von 12,20 kg Propylen/h sind hierfür 1,77 mg-Atom Ti/h erforderlich. Gleichzeitig wird weiteres DEAC dem Reaktionsgemisch in einer solchen Menge zugesetzt, daß das Atomverhältnis Al/Ti 17 : 1 beträgt.

Der Propylen-Umsatz beträgt 8,6 Gew.-%, bezogen auf eingesetztes Olefin, entsprechend einer Wachsproduktion von 1,04 kg/h. Der RSV-Wert des Wachses beträgt 0,57, sein Tropfpunkt 152°C. Die IR-spektroskopische Untersuchung ergibt, daß das Wachs ausschließlich isotaktische Struktur aufweist

## Beispiel 3

In der Apparatur des Beispiel 1 wird unter Verwendung des Katalysators II bei 1200 bar (1,2 · 10⁵ kPa) und 220°C polymerisiert. Auch in diesem Fall erfolgt die Einstellung der Reaktionstemperatur durch Zudosieren einer entsprechenden Menge Katalysator. Bei Einsatz von 12,18 kg Propylen/h sind hierfür 3,0 mg-Atom Ti/h erforderlich. Dem Reaktionsgemisch wird weiteres DEAC in einer solchen Menge zugeführt, daß das Atomverhältnis Al/Ti 13 : 1 beträgt.

Der Propylen-Umsatz beträgt 11,4 Gew.-%, bezogen auf eingesetztes Olefin, entsprechend einer Wachsproduktion von 1,42 kg/h. Der RSV-Wert des Wachses beträgt 0,30, sein Tropfpunkt 151°C. Die IR-spektroskopische Untersuchung ergibt, daß das Wachs ausschließlich isotaktische Struktur aufweist.

## Patentansprüche

1. Verfahren zur Herstellung isotaktischer Polypropylenwachse durch Polymerisation von Propylen bei 180 bis 350°C und 500 bis 3000 bar (5 · 10⁴ bis 3 · 10⁵ kPa), dadurch gekennzeichnet, daß man die Polymerisation ohne Verwendung eines Lösungs- oder Suspensionsmittels in Gegenwart eines Mischkatalysators durchführt, der aus einer Titan (III)-Halogenverbindung und einer aluminiumorganischen Verbindung besteht.

2. Verfahren nach Anspruch 1, dadurch gekennzeichnet, daß als Ti (III)-Halogenverbindung $TiCl_3$ oder $TiCl_3$/$AlCl_3$-Mischverbindungen eingesetzt werden.

3. Verfahren nach Anspruch 1 und 2, dadurch gekennzeichnet, daß als aluminiumorganische Verbindung Tri-n-octylaluminium oder Diethylaluminiumchlorid eingesetzt wird.

4. Verfahren nach Anspruch 1 bis 3, dadurch gekennzeichnet, daß das Atomverhältnis von Aluminium zu Titan im Katalysatorsystem 5 : 1 bis 30 : 1 und insbesondere 5 : 1 bis 20 : 1 beträgt.

5. Verfahren nach Anspruch 1 bis 4, dadurch gekennzeichnet, daß der Katalysator in einer Konzentration von etwa 0,03 bis etwa 10,0 mMol Ti/kg Polypropylen, insbesondere etwa 0,05 bis etwa 3,0 mMol Ti/kg Polypropylen angewendet wird.

## Claims

1. A process for preparing isotactic polypropylene waxes by polymerising propylene at 180 to 350°C and 500 to 3,000 bar (5 x 10⁴ to 3 x 10⁵ kPa), characterised in that the polymerisation is performed without using a solvent, or suspending medium in the presence of a mixed catalyst which consists of a titanium (III) halogen compound and an organoaluminium compound.

2. A process according to claim 1, characterised in that $TiCl_3$ or $TiCl_3$/$AlCl_3$ mixed compounds are used as titanium (III) halogen compounds.

3. A process according to claims 1 and 2, characterized in that the tri-n-octylaluminium or diethylalumihium chloride is used as the aluminium organic compound.

4. A process according to claims 1 to 3, characterised in that the atomic ratio of aluminium to titanium in the catalyst system is 5 : 1 to 30 : 1 and in particular 5 : 1 to 20 : 1.

5. A process according to claims 1 to 4, characterised in that the catalyst is used in a concentration of about 0.03 to about 10.0 mMol Ti/kg polypropylene, in particular about 0.05 to about 3.0 mMol Ti/kg polypropylene.

## Revendications

1. Procédé de préparation de cires de polypropylène isotactiques par polymérisation du propylène à des températures de 180 à 350°C et des pressions de 500 à 3 000 bar (5 x 10⁴ à 3 x 10⁵ kPa), caractérisé en ce que l'on effectue la polymérisation sans utiliser de solvant ni de milieu de suspension en présence d'un catalyseur mélange consistant en un composé halogéné du titane-III et un composé organique de l'aluminium.

2. Procédé selon la revendication 1, caractérisé en ce que l'on utilise en tant que composé halogéné du Ti-III, TiCl₃ ou des composés mélangés TiCt₃/AlCl₃.

3. Procédé selon les revendications 1 et 2, caractérisé en ce que l'on utilise en tant que composé organique de l'aluminium le tri-n-octylaluminium ou le chlorure de diéthyl-aluminium.

4. Procédé selon les revendications 1 à 3, caractérisé en te que le rapport atomique aluminium/titane dans te système catalyseur va de 5 : 1 à 30 : 1, plus spécialement de 5 : 1 à 20 : 1.

5. Procédé selon les revendications 1 à 4, caractérisé en ce que l'on utilise te catalyseur à une concentration d'environ 0,03 à 10,0 mmol de Ti par kg de polypropylene, et plus spécialement d'environ 0,05 à 3,0 mmot de Ti par kg de polypropylène.